Europäisches Patentamt

European Patent Office

Office européen des brevets

(19)

(11) EP 0 704 956 B1

## (12) FASCICULE DE BREVET EUROPEEN

(45) Date de publication et mention
de la délivrance du brevet:
**16.12.1998 Bulletin 1998/51**

(51) Int Cl.$^6$: **H02M 3/335**, H02M 3/338

(21) Numéro de dépôt: **95410115.0**

(22) Date de dépôt: **26.09.1995**

(54) **Régulateur de courant à découpage**

Schaltender Stromregler

Switching current regulator

(84) Etats contractants désignés:
**DE FR GB IT**

(30) Priorité: **30.09.1994 FR 9411973**

(43) Date de publication de la demande:
**03.04.1996 Bulletin 1996/14**

(73) Titulaire: **SGS-THOMSON MICROELECTRONICS S.A.**
**94250 Gentilly (FR)**

(72) Inventeur: **Pavlin, Antoine**
**F-13540 Puyricard (FR)**

(74) Mandataire: **de Beaumont, Michel**
**1bis, rue Champollion**
**38000 Grenoble (FR)**

(56) Documents cités:
**EP-A- 0 335 194**      **EP-A- 0 605 057**
**US-A- 4 939 632**

## Description

La présente invention concerne un régulateur à découpage permettant de fournir un courant constant à une charge, par exemple une batterie, avec un rendement élevé. La présente invention vise plus particulièrement un régulateur de courant à découpage dont la charge doit être isolée de la source d'alimentation du régulateur, souvent le réseau 220 volts.

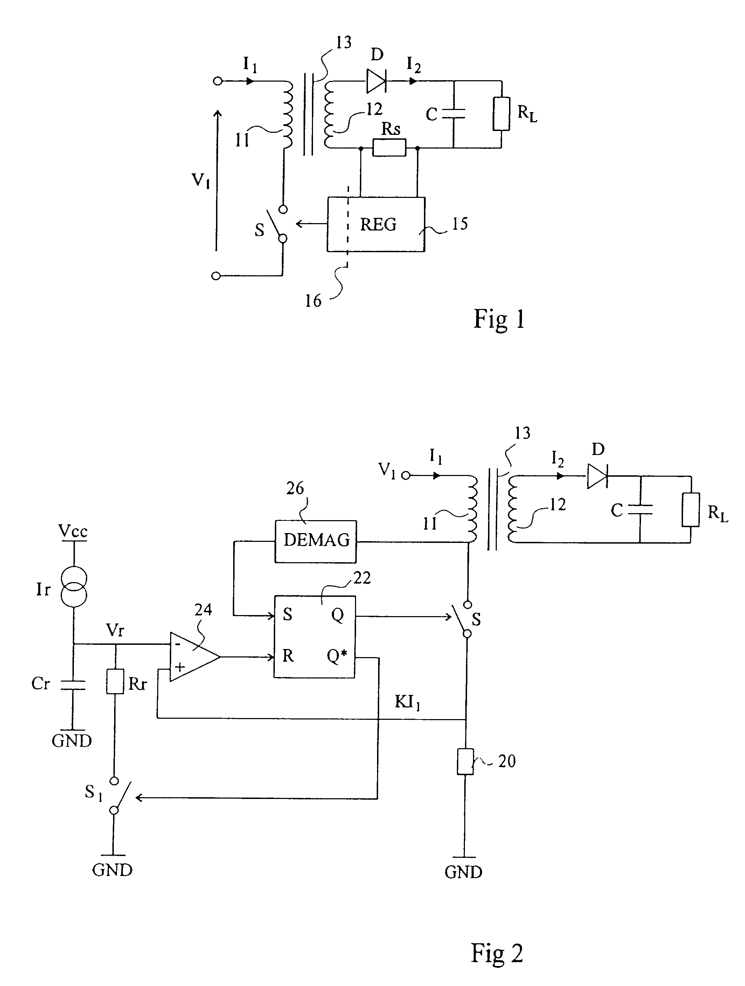

La figure 1 représente un exemple classique de régulateur à découpage. Il s'agit ici d'un régulateur dit à accumulation ou "flyback" tel que décrit dans le document US-A-4 939 632. Pour isoler la charge $R_L$ de ce régulateur, on prévoit deux enroulements 11 et 12 couplés par un noyau magnétique 13, mais isolés galvaniquement. Le premier enroulement 11 est relié à une source de tension $V_1$ par un interrupteur de puissance S. L'enroulement secondaire 12 est relié à la charge $R_L$ par une diode D. Une capacité de filtrage C est connectée en parallèle sur la charge $R_L$. La diode D est connectée de manière qu'aucun courant ne circule dans la charge lorsque l'enroulement primaire 11 est connecté à la tension $V_1$.

Lorsque l'interrupteur S est fermé, le courant $I_1$ dans l'enroulement primaire 11 augmente à partir d'une valeur initiale, en fonction des valeurs de la tension $V_1$ et de l'inductance présentée par l'enroulement 11. Pendant ce temps, le courant $I_2$ dans l'enroulement secondaire 12 est nul et de l'énergie s'accumule dans le noyau 13.

Lorsque l'interrupteur S est ouvert, le courant $I_1$ s'annule brusquement et l'énergie qui vient d'être accumulée dans le noyau 13 est transférée vers l'enroulement 12. Le courant $I_2$ atteint brusquement une valeur crête égale au courant crête atteint par le courant $I_1$, multiplié par le rapport du nombre de spires des enroulements 11 et 12. Le courant $I_2$ se met à décroître en fonction de l'inductance de l'enroulement 12 et de la tension aux bornes de la charge $R_L$.

L'interrupteur S est de nouveau fermé alors que le courant $I_2$ a atteint une valeur finale généralement indéterminée. Cette valeur finale, éventuellement nulle depuis un certain temps, détermine la valeur initiale à partir de laquelle le courant $I_1$ se met à croître.

La quantité d'énergie transférée du primaire vers le secondaire est fonction du rapport cyclique de commutation de l'interrupteur S, c'est-à-dire du rapport entre son temps de fermeture à chaque commutation et la période de commutation.

Pour assurer une régulation du courant moyen dans la charge, une résistance Rs est disposée en série avec l'enroulement 12. La tension aux bornes de la résistance Rs est fournie à un circuit de régulation 15 qui commande l'interrupteur S. Ce circuit de régulation filtre la tension aux bornes de la résistance Rs pour en extraire la valeur moyenne qui est comparée à une valeur de consigne. Le rapport cyclique de l'interrupteur S est ajusté de manière que la tension moyenne aux bornes de la résistance Rs (donc le courant secondaire moyen) tende vers la consigne.

Un inconvénient de tout régulateur à découpage à isolation galvanique entre primaire et secondaire, tel que celui de la figure 1, provient du fait que la grandeur à mesurer (courant, tension) se trouve au secondaire alors que l'élément qui permet d'ajuster cette grandeur, l'interrupteur de puissance S, se trouve au primaire. Comme cela est illustré par des pointillés 16, il est nécessaire de prévoir une isolation galvanique dans le circuit de régulation 15, entre la partie mesurant la tension aux bornes de la résistance Rs et la partie qui commande l'interrupteur S. Cette isolation est effectuée, par exemple, en utilisant un transformateur ou un opto-coupleur. L'utilisation d'un transformateur est coûteuse et encombrante tandis que l'utilisation d'un opto-coupleur est coûteuse et peu fiable dans le temps (un grand nombre de pannes dans des régulateurs actuels provient des opto-coupleurs).

Bien entendu, on pourrait envisager de réguler le courant moyen dans l'enroulement primaire 11, mais cette solution entraîne une régulation de la puissance moyenne fournie à la charge $R_L$ et non de son courant moyen qui varie alors en fonction de la tension d'alimentation $V_1$ et de la tension de sortie aux bornes de la charge.

Un objet de la présente invention est de prévoir un régulateur de courant à découpage dont le circuit de régulation se trouve entièrement du côté de l'interrupteur de puissance, c'est-à-dire qu'il n'est pas relié au secondaire et ne nécessite donc pas d'élément d'isolement.

Cet objet est atteint en utilisant un régulateur du type de la figure 1 dans un mode de fonctionnement particulier, dit auto-oscillant, où l'interrupteur de puissance est fermé dès que le courant au secondaire s'annule. Le courant dans l'enroulement primaire est mesuré et on ajuste sa valeur crête à une valeur de référence (ce qui est obtenu en ouvrant l'interrupteur de puissance lorsque le courant dans l'enroulement primaire atteint cette valeur de référence).

Cette seule mesure ne suffit pas car le rapport cyclique, et donc le courant moyen dans la charge au secondaire, dépend alors de la tension aux bornes de cette charge. Pour éviter cela, un aspect de l'invention est de faire varier la valeur de référence dans le sens du rapport cyclique.

L'invention concerne plus particulièrement un régulateur de courant à découpage du type à accumulation, comprenant des premier et deuxième enroulements couplés, et des moyens pour connecter le premier enroulement à une source de tension dès que les enroulements sont démagnétisés. Le régulateur comprend en outre un capteur du courant circulant dans le premier enroulement ; des moyens pour déconnecter le premier enroulement de la source de tension quand le courant dans le premier enroulement atteint une valeur de référence ; et des moyens pour faire varier la valeur de référence dans le sens du rapport cyclique.

Selon un mode de réalisation de la présente invention, un interrupteur de puissance connecte le premier enroulement à la source de tension avec le rapport cyclique. Une diode empêche un courant de circuler dans le deuxième enroulement lorsque le premier enroulement est connecté à la source de tension. Un détecteur de démagnétisation ferme l'interrupteur lorsque le courant dans le deuxième enroulement s'annule. L'interrupteur est ouvert lorsque le courant dans le premier enroulement atteint ladite valeur de référence.

Selon un mode de réalisation de la présente invention, la valeur de référence correspond à une tension de référence aux bornes d'une capacité polarisée par une source de courant de référence et déchargée à travers une résistance commutée en opposition de phase par rapport audit interrupteur de puissance.

Selon un mode de réalisation de la présente invention, le régulateur comprend un comparateur recevant la sortie du capteur de courant et la tension de référence, et une bascule dont une sortie directe commande l'interrupteur, dont une sortie complémentaire commande la commutation de la résistance, dont une entrée de mise à un est commandée par le détecteur de démagnétisation, et dont une entrée de mise à zéro est commandée par le comparateur.

Ces objets, caractéristiques, avantages ainsi que d'autres de la présente invention seront exposés plus en détail dans la description suivante de modes de réalisation particuliers faite à titre non limitatif à l'aide des figures jointes parmi lesquelles :

la figure 1, précédemment décrite, représente un exemple classique de régulateur à découpage dit à accumulation ;
la figure 2 représente un mode de réalisation selon la présente invention d'un circuit de commande d'interrupteur de puissance dans un régulateur de courant à découpage ;
la figure 3 représente des allures de signaux du circuit de la figure 2 ;
la figure 4 représente un exemple classique de circuit de détection de démagnétisation que l'on utilise dans certains convertisseurs à accumulation ; et
la figure 5 représente un mode de réalisation facilement intégrable en technologie "Smart Power" du circuit de la figure 2.

Dans la figure 2, un capteur de courant 20 détecte, selon l'invention, le courant dans l'enroulement primaire 11 d'un convertisseur du type de la figure 1. Ce capteur 20 est, par exemple, une simple résistance de faible valeur disposée, comme cela est représenté, entre l'interrupteur de puissance S et la borne négative de la source de tension $V_1$, ici la masse GND. L'information de courant, notée $KI_1$, peut également être fournie de nombreuses autres manières. Par exemple, dans le cas où l'interrupteur de puissance S est un transistor MOS vertical constitué d'un grand nombre de cellules en parallèle, l'information de courant pourra être obtenue à partir du courant circulant dans un petit nombre de cellules identiques à celles du transistor MOS de puissance.

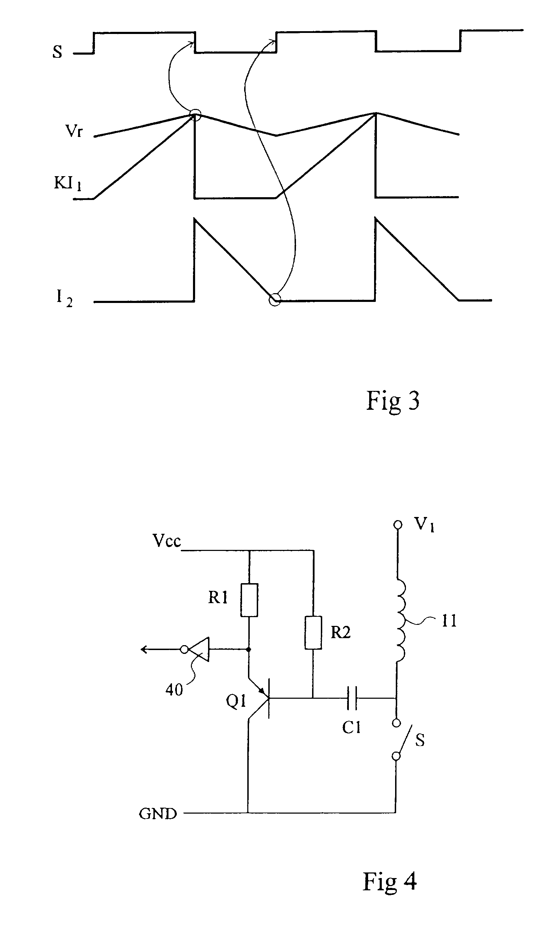

L'interrupteur S est commandé par la sortie non-inversée Q d'une bascule 22 de type RS dont l'entrée de mise à zéro "R" reçoit la sortie d'un comparateur 24 qui compare l'information de courant $KI_1$ à une tension de référence Vr. L'entrée de mise à un "S" de la bascule 22 reçoit la sortie d'un circuit de détection de démagnétisation 26, dont un exemple est décrit ultérieurement en relation avec la figure 4. Ce circuit de détection sert à faire fonctionner le régulateur en mode "auto-oscillant", mode indispensable pour obtenir une régulation du courant moyen au secondaire à l'aide d'une mesure du courant au primaire.

La figure 3 représente un exemple d'allure du signal de commande de l'interrupteur S, de la tension de référence Vr, de l'information de courant $KI_1$, et du courant $I_2$ dans l'enroulement secondaire 12. La tension de référence Vr a été représentée avec une légère variation dont l'origine sera décrite ultérieurement en relation avec des éléments non encore décrits de la figure 4.

Quand l'interrupteur S est fermé, le courant Il, et donc l'information de courant $KI_1$, croissent régulièrement essentiellement en fonction de la tension $V_1$ et de l'inductance de l'enroulement 11. Pendant ce temps, le courant $I_2$ est nul.

Quand l'information $KI_1$ atteint la valeur Vr, le comparateur 24 met la bascule 22 à zéro, ce qui ouvre l'interrupteur S. Le courant Il, qui vient d'atteindre sa valeur crête $I_{1p}$, s'annule brusquement tandis que le courant $I_2$ atteint brusquement sa valeur crête $I_{2p}$ qui est égale au courant crête $I_{1p}$ multiplié par le rapport n du nombre de spires des enroulements 11 et 12. Ainsi, la valeur crête $I_{1p}$ est fixée à Vr/K et la valeur crête $I_{2p}$ à nVr/K. Le courant $I_2$ décroît régulièrement, essentiellement en fonction de la tension aux bornes de la charge $R_L$ et de l'inductance de l'enroulement 12.

Quand le courant $I_2$ s'annule, c'est-à-dire quand le noyau 13 des enroulements 11 et 12 est démagnétisé, le circuit de détection de démagnétisation 26 met la bascule 22 à un, ce qui ferme l'interrupteur S, et ainsi de suite. Ce mode de fonctionnement, où l'interrupteur S est refermé dès que le courant $I_2$ au secondaire s'annule, est dit "auto-oscillant".

Dans ce mode de fonctionnement auto-oscillant, et en supposant que la valeur de la tension aux bornes de la charge $R_L$ ne varie pas significativement pendant un cycle de commutation de l'interrupteur S (ce qui est le cas d'une batterie), la valeur moyenne du courant $I_2$ s'exprime par

$$I_{2m} = I_{2p}(1\text{-}r)/2 = nI_{1p}(1\text{-}r)/2, \qquad (1)$$

où r est le rapport cyclique de commutation de l'interrupteur S.

En supposant que les tensions $V_1$ et $Vr$ sont constantes, la valeur crête $I_{1p}$ du courant $I_1$ est atteinte en une durée constante après chaque fermeture de l'interrupteur S. Le temps d'annulation du courant $I_2$ varie dans le sens inverse de la tension aux bornes de la charge $R_L$. Plus cette tension est faible, plus le temps de démagnétisation est long, et plus le rapport cyclique r de commutation de l'interrupteur S est faible. Alors, d'après la relation (1), la valeur moyenne $I_{2m}$ augmente avec la diminution de la tension aux bornes de la charge. On obtient un effet de régulation de puissance fournie à la charge $R_L$ et non de régulation du courant dans la charge $R_L$.

Pour obtenir une régulation du courant dans la charge $R_L$, il est prévu, selon un aspect de l'invention, de faire varier la tension de référence $Vr$ dans le même sens que le rapport cyclique r, par exemple proportionnellement à $1/(1-r)$.

Pour cela, dans la figure 2, la tension de référence $Vr$ est recueillie aux bornes d'une capacité $Cr$ dont une borne est connectée à la masse GND et l'autre à une tension d'alimentation Vcc par une source de courant Ir. La tension Vcc est une tension continue d'alimentation du circuit de régulation qui est obtenue à partir de la tension $V_1$. La tension $Vr$ est également reliée à la masse GND par l'intermédiaire d'une résistance $Rr$ disposée en série avec un interrupteur S1. Cet interrupteur S1 est commandé par une sortie inversée Q* de la bascule 22. Ainsi, l'interrupteur S1 est commuté avec un rapport cyclique de 1-r.

Quand l'interrupteur S est fermé, l'interrupteur S1 est ouvert. La source de courant Ir charge la capacité $Cr$ et la tension $Vr$ tend vers Vcc. Lorsque l'interrupteur S est ouvert, l'interrupteur S1 est fermé. Alors, la résistance $Rr$ dérive une partie du courant de la source Ir et la tension $Vr$ tend vers une valeur $RrIr$.

En pratique, les constantes de temps de charge et de décharge de la capacité $Cr$ sont choisies élevées par rapport à la période de commutation de l'interrupteur S. Ainsi, la tension $Vr$ est pratiquement constante, et elle s'établit à une valeur

$$Vr = IrRr/(1-r).$$

La valeur crête du courant $I_1$ est fixée à

$$I_{1p} = Vr/K = IrRr/K(1-r). \qquad (2)$$

En combinant les relations (1) et (2), on obtient :

$$I_{2m} = nRrIr/2K,$$

qui est une valeur constante que l'on peut fixer en ajustant une quelconque des valeurs Ir, Rr ou K.

La figure 4 représente un exemple de circuit de détection de démagnétisation 26 que l'on peut utiliser dans le régulateur de la figure 2. Il comprend un transistor PNP Q1 dont l'émetteur est relié à la tension Vcc par une résistance R1 et dont le collecteur est relié à la masse GND. La base du transistor Q1 est reliée au point de connexion entre l'interrupteur S et l'enroulement 11 par une capacité C1. Une résistance R2 relie la base du transistor Q1 à la tension Vcc. Le signal de détection est prélevé sur l'émetteur du transistor Q1 et inversé (40) avant d'être fourni à la bascule 22.

Pendant que l'interrupteur S est fermé, la capacité C1 est chargée positivement du côté de la base du transistor Q1 à la tension Vcc. Lorsque l'interrupteur S est ouvert, la tension aux bornes de l'enroulement 11 s'inverse et se met à charger négativement la capacité C1 par la résistance R2. Au moment où le courant $I_2$ s'annule, la tension aux bornes de l'enroulement 11 s'annule également. Alors, la capacité C1 se décharge par la base du transistor Q1 et la résistance R1. Le transistor Q1, qui était jusque là bloqué, devient conducteur et tire la sortie du circuit de détection vers la masse.

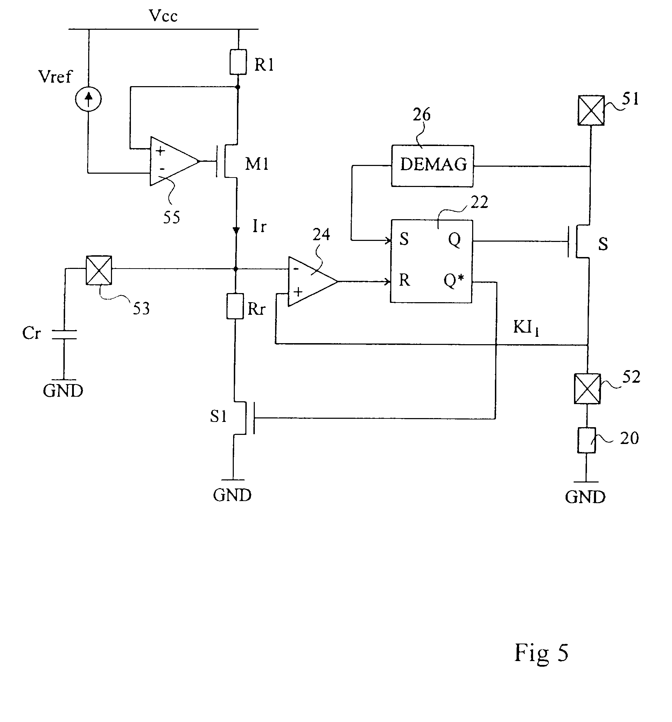

La figure 5 représente un mode de réalisation de convertisseur selon l'invention facilement intégrable dans des caissons logiques associés à des transistors MOS verticaux en technologie MOS "Smart Power". Les interrupteurs S et S1 sont des transistors MOS. L'enroulement 11, la résistance de mesure de courant 20, et la capacité $Cr$ ne peuvent être intégrés et sont reliés au circuit de commande intégré par des broches respectives 51, 52 et 53. Le courant Ir est fourni par une source comprenant un transistor MOS M1 à canal N, une résistance R1, une source de tension Vref et un amplificateur opérationnel 55. La résistance R1 est reliée entre le drain du transistor M1 et la tension Vcc. Le courant Ir est prélevé sur la source du transistor M1. L'amplificateur 55 commande la grille du transistor M1 et reçoit sur son entrée non-inverseuse la tension de drain du transistor M1. La source de tension Vref est reliée entre l'entrée inverseuse de l'amplificateur 55 et la tension Vcc.

Avec cette configuration, le courant Ir est égal à Vref/R1. Les valeurs exactes des résistances R1 et Rr sont difficiles à déterminer, mais ce qui importe dans ce cas est le rapport des résistances R1 et Rr, qui peut être choisi avec précision, car les résistances intégrées sur une même puce sont appariées.

**Revendications**

1. Régulateur de courant à découpage du type à accumulation comprenant : un transformateur avec

   - des premier (11) et deuxième (12) enroulements couplés ;
   - des moyens (S, 26) pour connecter le premier enroulement par un interrupteur de puissance à une source de tension (V$_1$) dès que les enroulements sont démagnétisés ;

- un capteur (20) du courant (I$_1$) circulant dans le premier enroulement ;

- des moyens (24, S) pour déconnecter le premier enroulement de la source de tension quand le courant dans le premier enroulement atteint une valeur de référence (Vr/K), d'où il résulte que le premier enroulement est commuté avec un rapport cyclique (r) ; et caractérisé en ce qu'il comprend :

- des moyens (Ir, Cr, S1, Rr) pour faire varier la valeur de référence dans le sens dudit rapport cyclique.

2. Régulateur de courant selon la revendication 1, caractérisé en ce qu'il comprend :

- des moyens (D) pour empêcher un courant de circuler dans le deuxième enroulement (12) lorsque le premier enroulement est connecté à la source de tension ;

- un détecteur de démagnétisation (26) pour fermer l'interrupteur lorsque le courant dans le deuxième enroulement s'annule ; et

- des moyens (24) pour ouvrir l'interrupteur lorsque le courant dans le premier enroulement atteint ladite valeur de référence.

3. Régulateur de courant selon la revendication 2, caractérisé en ce que ladite valeur de référence correspond à une tension de référence (Vr) aux bornes d'une capacité (Cr) polarisée par une source de courant de référence (Ir) et déchargée à travers une résistance (Rr) commutée en opposition de phase par rapport audit interrupteur de puissance.

4. Régulateur de courant selon la revendication 3, caractérisé en ce qu'il comprend :

- un comparateur (24) recevant la sortie (KI$_1$) du capteur de courant et la tension de référence (Vr) ; et

- une bascule (22) dont une sortie directe (Q) commande ledit interrupteur (S), dont une sortie complémentaire (Q∗) commande la commutation de ladite résistance (Rr), dont une entrée de mise à un (S) est commandée par le détecteur de démagnétisation, et dont une entrée de mise à zéro (R) est commandée par le comparateur.

**Patentansprüche**

1. Schaltender Stromregler (Umschalt-Stromregler) vom kumulierenden oder flyback-Typ,, umfassend

- einen Transformator mit einer ersten (11) und einer zweiten (12) Wicklung, die miteinander gekoppelt sind;

- Mittel (S, 26) zur Verbindung der ersten Wicklung über einen Leistungsschalter mit einer Spannungsquelle (V1), sobald die Wicklungen entmagneisiert sind;

- einen Meßfühler (20) für den in der ersten Wicklung fließenden Strom (I1);

- Mittel (24, S) zur Trennung der ersten Wicklung von der Spannungsquelle, sobald der Strom in der ersten Wicklung einen Bezugswert (Vr/K) erreicht, mit der Folge, daß die erste Wicklung mit einem Tastverhältnis (r) umgeschaltet wird;

dadurch gekennzeichnet

daß der Regler Mittel (Ir, Cr, S1, Rr) aufweist, um den Bezugswert im gleichen Sinn wie das genannte Tastverhältnis zu variieren.

2. Stromregler nach Anspruch 1, dadurch gekennzeichnet, daß er umfaßt:

- Mittel (D), um einen Stromfluß in der zweiten Wicklung (12) zu unterbinden, wenn die erste Wicklung mit der Spannungsquelle verbunden ist;

- einen Entmagnetisierungs-Detektor (26) zur Schließung des Schalters, wenn der Strom in der zweiten Wicklung Null wird;

- sowie Mittel (24) zum Öffnen des Schalters, wenn der Strom in der ersten Wicklung den genannten Bezugswert erreicht.

3. Stromregler nach Anspruch 2, dadurch gekennzeichnet, daß der genannnte Bezugswert einer Bezugsspannung (Vr) an den Anschlüssen eines Kondensators (Cr) entspricht, der durch eine Bezugsstromquelle (Ir) vorgespannt und über einen in Gegenphase bezüglich dem genannten Leistungsschalter umgeschalteten Widerstand (Rr) entladen wird.

4. Stromregler nach Anspruch 3, dadurch gekennzeichnet, daß er umfaßt:

- einen Komparator (24), dem die Ausgangsgröße (KI1) des Strom-Meßfühlers und die Bezugsspannung (Vr) zugeführt werden; sowie

- eine Kipp- bzw. Flip-Flop -Schaltung (22), deren Direkt-Ausgang (Q) den genannten Schalter (S) und dessen Komplementär-Ausgang (Q*) die Umschaltung des genannten Widerstands (Rr) steuern, und deren Setz-Eingang (S) durch den Entmagnetisierungs-Detektor und deren Rücksetzeingang (R) durch den Komparator gesteuert werden.

magnetization sensor, and a reset input (R) controlled by the comparator.

**Claims**

1. A switched current regulator of the flyback type, comprising:

   - a transformer with first (11) and second (12) coupled windings;
   - means (S, 26) for connecting the first winding to a voltage source ($V_1$) through a power switch as soon as the windings are demagnetized;
   - a sensor (20) for sensing the current ($I_1$) flowing through the first winding;
   - means (24, S) for disconnecting the first winding from the voltage source when the current in the first winding reaches a reference value (Vr/ K), whereby the first winding is switched according to a duty cycle (r); and

   characterized in that it comprises

   - means (Ir, Cr, S1, Rr) for varying the reference value in the same direction as said duty cycle.

2. The current regulator of claim 1, comprising:

   - means (D) for preventing a current from flowing in the second winding (12) when the first winding is connected to the voltage source;
   - a demagnetization sensor (26) for turning on the switch when the current in the second winding gets nil; and
   - means (24) for turning off the switch when the current in the first winding reaches said reference value.

3. The current regulator of claim 2, wherein said reference value corresponds to a reference voltage (Vr) across a capacitor (Cr) that is biased by a reference current source (Ir) and is discharged through a resistor (Rr) switched in phase opposition with respect to said power switch.

4. The current regulator of claim 3, comprising:

   - a comparator (24) receiving the output ($KI_1$) of the current sensor and the reference voltage (Vr); and
   - a flip-flop (22) having a direct output (Q) that controls said switch (S), a complementary output (Q*) that controls the switching of said resistor (Rr), a set input (S) controlled by the de-

Fig 1

Fig 2

Fig 3

Fig 4

Fig 5